# FASCICULE DE BREVET EUROPEEN

(11) **EP 1 032 504 B1**
(45) Date de publication et mention de la délivrance du brevet: **23.07.2003**
(21) Numéro de dépôt: 99946233.6
(22) Date de dépôt: 24.09.1999
(51) Int. Cl.: B60K 11/04

(54) **DISPOSITIF DE FIXATION D'UN EQUIPEMENT, NOTAMMENT D'UN ECHANGEUR DE CHALEUR, SUR UN ELEMENT DE STRUCTURE D'UN VEHICULE AUTOMOBILE**
VORRICHTUNG ZUR BEFESTIGUNG EINER EINRICHTUNG, INSBESONDERE EINES WÄRMETAUSCHERS, AN EINEM STRUKTURELEMENT EINES KRAFTFAHRZEUGES
DEVICE FOR FIXING A PIECE OF EQUIPMENT, IN PARTICULAR A HEAT EXCHANGER, ON A MOTOR VEHICLE STRUCTURAL ELEMENT

(30) Priorité: 25.09.1998 FR 9812029
(43) Date de publication de la demande: 06.09.2000
(73) Titulaire: VALEO THERMIQUE MOTEUR, 78321 La Verrière (FR); VALEO VISION, 93000 Bobigny (FR)
(72) Inventeur: CANTINEAU, Eric, F-75017 Paris (FR); GUYOMARD, Jean-Nicolas, F-27930 Fuguet (FR); SIGONNEAU, Jacques, F-28170 Theuvy-Achères (FR)
(74) Mandataire: Rolland, Jean-Christophe
(86) Numéro de dépôt international: FR9902284
(87) Numéro de publication internationale: WO00018604

(56) Documents cités:
- EP-A- 0 331 540
- DE-C- 4 137 038
- US-A- 4 742 881
- US-A- 5 441 100

## Description

L'invention concerne la fixation d'un équipement de véhicule automobile sur un élément de structure de ce véhicule.

Elle concerne en particulier le montage des échangeurs de chaleur, par exemple le radiateur du circuit de refroidissement du moteur, ou le condenseur d'une boucle de climatisation d'une installation de ventilation, chauffage et/ou climatisation de l'habitacle du véhicule, ou encore la buse d'un groupe moto-ventilateur de cette installation.

Elle s'applique en particulier, mais de façon non limitative, au montage de ces équipements sur une façade du véhicule (face avant), notamment réalisée sous forme d'un module unitaire pourvu de divers équipements (radiateur de refroidissement, projecteurs,...), préparé et livré par l'équipementier et avantageusement prêt à être monté sur le véhicule par le constructeur.

DE 41 37 038 décrit un dispositif de fixation d'un équipement de véhicule selon le préambule de la revendication 1.

Généralement, un échangeur de chaleur du type précité peut être fixé sur l'élément de structure du véhicule par l'intermédiaire de ressorts métalliques prévus en zone supérieure de l'élément de structure, d'une part, et de plots élastiques d'amortissement en partie inférieure, d'autre part. Les ressorts permettent ainsi de rattraper les diverses tolérances dimensionnelles et autorisent le montage de différents types de radiateurs grâce à leur flexibilité. Les plots élastiques précités assurent, quant à eux, l'amortissement et le centrage sur l'élément de structure.

Toutefois, cette technique de montage nécessite la mise en place d'éléments rapportés (ressorts et pions de fixation) impliquant un surcoût relatif aux pièces supplémentaires à prévoir et au temps nécessaire à leur montage dans le processus d'assemblage.

L'un des buts de l'invention est de remédier à cette difficulté en proposant une nouvelle configuration de montage permettant de réduire le nombre de pièces nécessaires à l'assemblage, d'assurer un montage rapide et de conserver une flexibilité suffisante pour accepter plusieurs types d'équipements différents.

La présente invention vient alors améliorer la situation.

Elle porte sur un dispositif de fixation d'un équipement de véhicule automobile, notamment d'un échangeur de chaleur, sur un élément de structure du véhicule comportant une partie ouverte dans laquelle est monté l'équipement.

Selon l'invention, le dispositif de fixation comporte au moins deux patins disposés de part et d'autre de l'équipement tandis que l'élément de structure comporte au moins deux rebords internes sensiblement parallèles et délimitant la partie ouverte précitée. Chaque patin est en appui sur l'un des rebords, d'une part, et sur une surface sommitale externe de l'équipement, d'autre part. Les patins sont réalisés dans une matière déformable de sorte que l'équipement est monté en force entre les patins. Ainsi, la fixation de l'équipement au moyen de patins déformables permet d'amortir les vibrations que peut subir l'équipement et d'accroître les limites de tolérance à la fabrication de l'équipement et de l'élément de structure.

Pour faciliter le montage de l'équipement entre les deux rebords de l'élément de structure, l'un au moins des rebords porte une surface d'appui supplémentaire pour l'un au moins des patins, faisant saillie dans un plan sensiblement perpendiculaire à la surface du rebord. Ainsi, l'équipement est monté par pivotement autour d'une arête que forme l'intersection de cette surface d'appui et de la surface du rebord.

Avantageusement, l'élément de structure comporte un logement pour chaque patin, comprenant des parois latérales faisant saillie des rebords. Ainsi, chaque patin est immobilisé par rapport à une direction sensiblement parallèle au rebord.

Selon une autre caractéristique avantageuse de la présente invention, les patins présentent sensiblement une forme en "U" et les deux pattes du "U" sont en contact serré avec l'équipement pour le maintenir sensiblement fixe dans un plan traversant les deux rebords.

Pour immobiliser l'équipement par rapport à une direction parallèle au rebord, le dispositif selon l'invention comporte en outre des moyens d'encliquetage de l'équipement sur au moins un rebord latéral que comporte l'élément de structure, adjacent aux deux rebords.

Pour former les moyens d'encliquetage précités, l'équipement comporte au moins un plan incliné faisant saillie d'une paroi latérale externe, ce plan incliné étant propre à coopérer avec un logement sensiblement homologue que comporte le rebord latéral de l'élément de structure précité.

Avantageusement, les patins sont réalisés dans un matériau à grand coefficient de frottement, en particulier en coopération avec la paroi sommitale précitée de l'équipement, ce matériau étant notamment du type comprenant un caoutchouc.

D'autres avantages et caractéristiques de la présente invention apparaîtront à l'examen de la description détaillée ci-après et des dessins annexés sur lesquels :
- la figure 1 représente un élément de structure comportant, dans l'exemple décrit, un module de face avant d'un véhicule automobile ;
- la figure 2 représente schématiquement une vue de face selon la coupe II de la figure 1 de l'équipement précité qui, dans l'exemple décrit, comporte un radiateur d'un circuit de refroidissement du moteur du véhicule ;
- la figure 3 représente schématiquement une vue de côté selon la coupe III de la figure 2, du dispositif de fixation selon un mode de réalisation préféré de la présente invention ;
- la figure 4 représente schématiquement une vue de côté selon la même coupe que la figure 3, d'un dispositif de fixation selon une variante du mode de réalisation précité ;
- la figure 5 représente une vue détaillée d'un logement de l'un des patins du dispositif de fixation selon l'invention;
- la figure 6 représente une vue détaillée d'un logement du plan incliné précité, monté sur une paroi latérale de l'élément de structure ; et
- la figure 7 représente schématiquement une vue selon la coupe VII de la figure 6, des moyens d'encliquetage précités.

La description détaillée ci-après et les dessins annexés contiennent pour l'essentiel des éléments de caractère certain. Ils pourront non seulement servir à mieux faire comprendre la présente invention mais aussi contribuer à sa définition, le cas échéant.

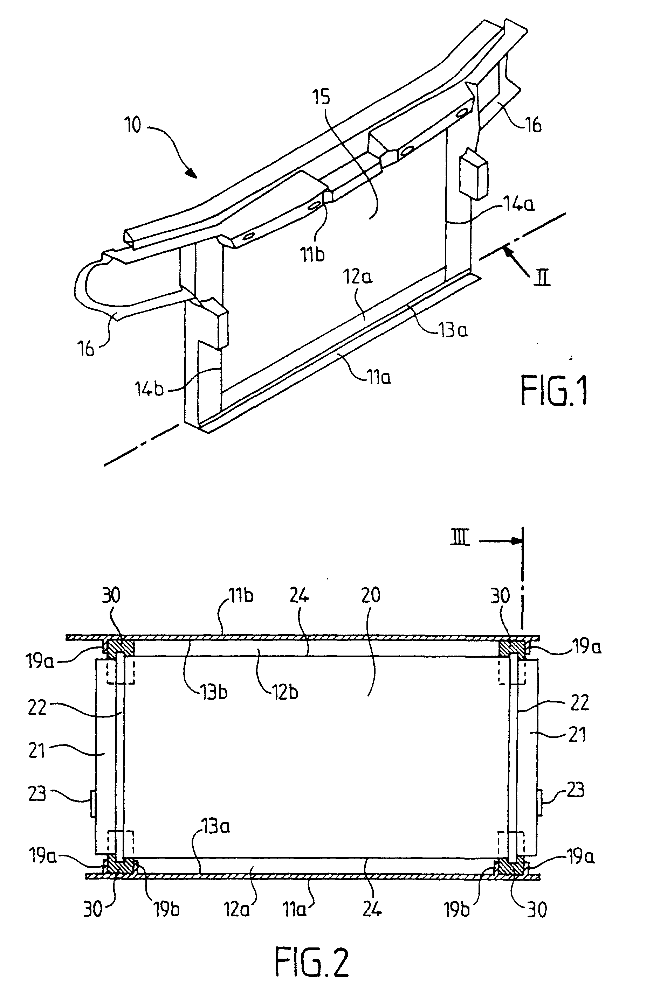

On se réfère tout d'abord à la figure 1 pour décrire un élément de structure comportant un module de face avant 10 d'un véhicule automobile. Ce module comporte un cadre ouvert 15 dans lequel est destiné à être monté un équipement du véhicule comprenant un radiateur d'un circuit de refroidissement 20. Le module de face avant comporte des moyens de fixation (non représentés) à la carrosserie du véhicule ou encore peut-être intégré directement à la carrosserie, par exemple par soudure.

Le module de face avant 10 représenté sur la figure 1 comporte des ouvertures dans des cadres 16 pour loger, dans l'exemple, des projecteurs (phares du véhicule). Il comporte en outre un cadre ouvert 15 délimité horizontalement par deux rebords 11a et 11b sensiblement parallèles, et verticalement par deux parois latérales 14a et 14b, sensiblement parallèles et adjacentes aux rebords 11a et 11b. Ainsi, les deux rebords et les deux parois latérales forment un cadre sensiblement rectangulaire dans lequel est destiné à être inséré l'équipement.

Dans l'exemple décrit, cet équipement comporte un radiateur d'un circuit de refroidissement du moteur du véhicule automobile. De manière classique, ce radiateur est muni d'un faisceau de tubes réunis à chacune de leurs extrémités opposées par une plaque collectrice 22 (figure 2). Chacune des deux plaques collectrices 22 ferme une boîte à fluide 21. Dans l'exemple, le fluide que contiennent les deux boîtes 21 est de l'eau circulant dans un circuit de refroidissement. En se référant à la figure 2, ce radiateur de refroidissement 20 est placé entre les deux rebords 11a et 11b du module de face avant.

Selon l'invention, le dispositif de fixation comporte des patins 30, réalisés dans une matière déformable (un caoutchouc dans l'exemple décrit) et insérés entre le radiateur 20 et les rebords 11a et 11b. En particulier, ces patins 30 viennent prendre appui sur une surface sommitale externe 24 (figure 2) du radiateur 20, d'une part, et sur les rebords 11a et 11b d'autre part. Pour éviter un glissement des patins dans une direction parallèle aux rebords 11a et 11b, il est prévu des butées latérales 19a et 19b faisant saillie des rebords 11a et 11b, en contact avec les patins en caoutchouc 30. Il est à noter que dans une variante simplifiée du dispositif de fixation, les butées latérales 19b faisant saillie du rebord inférieur 11a peuvent être supprimées.

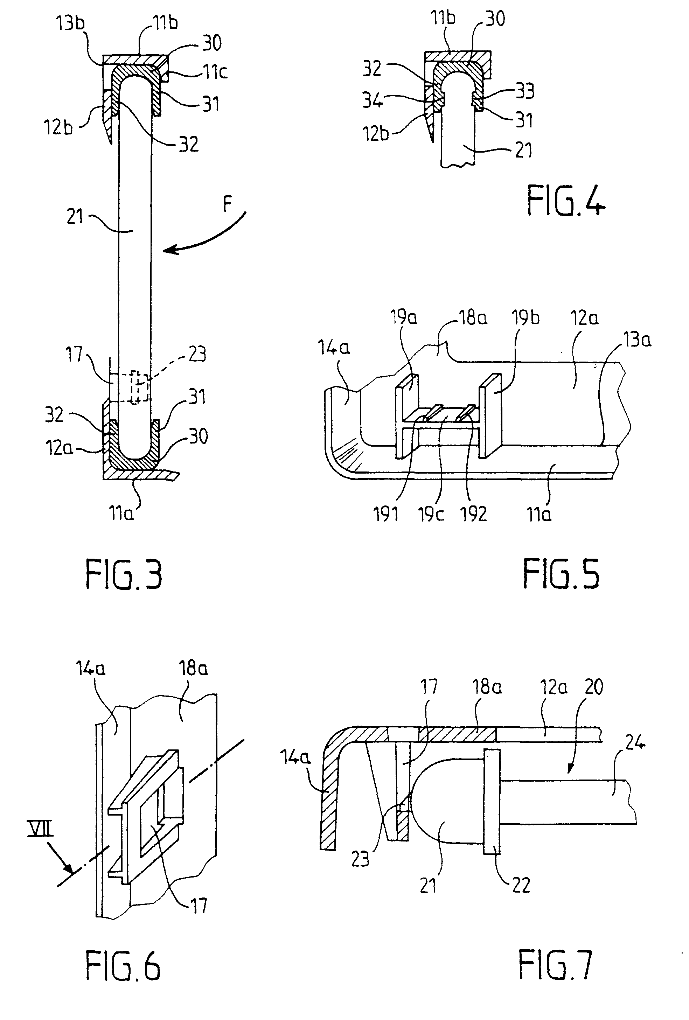

En se référant à la figure 3, il apparaît que les quatre patins que comporte le dispositif de fixation selon une forme de réalisation préférée de l'invention, présentent sensiblement une forme en "U", venant coiffer des parties d'extrémité des boîtes à eau 21 et des parois sommitales 24. Ainsi les deux pattes 31 et 32 des patins en "U" permettent d'immobiliser le radiateur 20 dans le plan du cadre 15.

Il est à noter ici que le terme "parois sommitales" est à prendre au sens large. A ce titre, il englobe les joues du radiateur de refroidissement 20, ainsi que les extrémités des plaques collectrices 22 et des boîtes à eau 21. Dans l'exemple, chaque patin est monté à cheval sur l'une des extrémités de l'une des plaques collectrices 22 (figure 2). Les patins comportent alors des évidements centraux épousant la forme des protubérances que forment les extrémités des plaques collectrices 22 sur les surfaces sommitales 24, ce qui permet alors d'immobiliser l'échangeur de chaleur 20 par rapport aux patins, en translation le long des rebords 11a,11b. En variante, il peut être prévu de rajouter des butées latérales sur les surfaces sommitales 24 de l'échangeur de chaleur, et d'insérer les patins entre ces butées et les butées 19a du module de face avant.

Pour monter le radiateur 20 dans le cadre 15, il est prévu de :
- disposer deux patins sur la surface supérieure du radiateur et sur la surface inférieure, à cheval sur les extrémités des plaques collectrices 22,
- puis d'insérer les patins supérieurs dans des logements que forme le rebord supérieur 11b, la saillie latérale 12b et le prolongement latéral 11c du rebord supérieur (haut de la figure 3),
- et enfin de faire pivoter le radiateur (flèche F) autour de l'arête 13b que forme l'intersection du rebord supérieur 11b et de la saillie latérale 12b.

Les patins inférieurs du dispositif de fixation viennent alors en butée contre la saillie latérale 12a que comporte le rebord inférieur 11a (bas de la figure 3), formant ainsi des surfaces d'appui des patins inférieurs.

On se réfère maintenant à la figure 4 pour décrire une variante du mode de réalisation des patins du dispositif de fixation décrit ci-avant. Dans cette variante, les pattes des patins en "U" présentent dans leur surface interne des protubérances 33 et 34 propres à s'engager dans des encoches (creux fermés) prévues sur les boîtes à eau 21. Ainsi, le radiateur de refroidissement peut être conformé pour coopérer avec le dispositif de fixation selon l'invention.

A ce titre, la présente invention vise aussi toutes les modifications apportées à l'équipement et à l'élément de structure, dès lors qu'ils comportent des formes propres à coopérer avec un dispositif de fixation selon l'invention.

C'est ainsi qu'en se référant aux figures 2 et 3, il apparaît dans une partie inférieure de la boîte collectrice 21 une protubérance 23 comportant un plan incliné (figure 7). Cette protubérance rajoutée sur la surface latérale externe de la boîte 21, vient coopérer avec un logement homologue 17 (figure 6) que comporte une patte 17a issue de la surface 18a adjacente à la paroi latérale 14a du module de face avant, formant ainsi des moyens d'encliquetage latéral du dispositif de fixation, tandis que la surface 18a et la paroi latérale 14a forment le rebord latéral précité. En particulier, il est prévu une protubérance 23 sur chaque boîte à eau 21 de manière à fixer latéralement le radiateur 21 au module.

On se réfère maintenant à la figure 5 pour décrire un logement que porte le rebord 11a, pour recevoir un patin du dispositif de fixation selon une forme de réalisation élaborée de l'invention. Ce logement comporte deux parois latérales 19a et 19b formant butées latérales du patin ainsi qu'une surface d'appui 19c parallèle au rebord 11a. Avantageusement, cette surface d'appui 19c comporte deux chanfreins 191 et 192 pour faciliter le montage du patin.

Ainsi, le dispositif de fixation selon l'invention permet avantageusement d'amortir les vibrations que peut subir l'équipement et d'augmenter les limites de tolérance à la fabrication de l'équipement et de l'élément de structure, les patins qu'il contient étant réalisés dans un matériau déformable. Un autre avantage que procure la présente invention consiste en ce que les patins sont sensiblement identiques et peuvent être réalisés en série par moulage, ou encore par extrusion dans un profil constant issu d'une filière, puis coupés à longueur souhaitée. Un autre avantage que procure l'invention est lié à la rapidité du montage (introduction des patins en appui contre les parois 12b, 11b et 11c de la figure 3, et mouvement de pivotement F).

Bien entendu, la présente invention ne se limite pas à la forme de réalisation décrite ci-avant à titre d'exemple. Elle s'étend à d'autres variantes.

C'est ainsi que l'équipement précité peut présenter un échangeur de chaleur autre qu'un radiateur de refroidissement, par exemple un condenseur d'une boucle de climatisation d'une installation de ventilation, chauffage et/ou climatisation de l'habitacle du véhicule.

L'équipement peut comporter encore un élément autre qu'un échangeur de chaleur, par exemple une buse d'un groupe moto-ventilateur de cette installation.

Par ailleurs, les structures respectives décrites ci-avant du module de face avant et du dispositif de fixation peuvent avantageusement s'adapter à la fixation de deux équipements côte à côte, par exemple un radiateur de refroidissement suivi d'un condenseur d'une boucle de climatisation.

En outre, le matériau dans lequel sont réalisés les patins peut être différent d'un caoutchouc, par exemple un matériau thermoplastique élastomère épousant la forme des parois sommitales 24 du radiateur 20.

Le radiateur 20 peut être monté différemment, par exemple à 90° par rapport à sa configuration décrite dans l'exemple. Dans ce cas, les boîtes collectrices sont horizontales, tandis que les patins sont montés sur les parois latérales 14a et 14b du module de face avant.

Le nombre de patins prévu peut varier selon les besoins de l'application du dispositif selon l'invention. C'est ainsi que dans une forme de réalisation simplifiée du dispositif, il peut être prévu deux patins disposés de part et d'autre de l'équipement.

## Revendications

1. Dispositif de fixation d'un équipement de véhicule automobile, notamment d'un échangeur de chaleur (20), sur un élément de structure du véhicule (10) comportant une partie ouverte (15) dans laquelle est monté l'équipement (20), au moins deux patins (30) disposés de part et d'autre de l'équipement (20), tandis que l'élément de structure comporte au moins deux rebords internes (11a,11b) sensiblement parallèles et délimitant ladite partie ouverte (15), chaque patin étant en appui sur l'un desdits rebords (11a,11b), d'une part, et sur une surface sommitale externe (24) de l'équipement, d'autre part, chaque patin (30) étant réalisé dans une matière déformable de sorte que l'équipement (20) est monté en force entre les patins, **caractérisé en ce que** chaque patin présente sensiblement une forme en "U" tandis que les deux pattes du "U" (31,32) sont en contact avec l'équipement (20) pour le maintenir sensiblement fixe dans un plan traversant les deux rebords (11a,11b).

2. Dispositif selon la revendication 1, **caractérisé en ce que** l'un au moins des rebords (11b) porte une surface d'appui supplémentaire (12b) pour l'un au moins des patins, faisant saillie dans un plan sensiblement perpendiculaire à la surface du rebord (11b), de manière à monter l'équipement par pivotement (F) sensiblement autour d'une arête (13b) que forme l'intersection de ladite surface d'appui (12b) et du rebord (11b).

3. Dispositif selon l'une des revendications 1 et 2, **caractérisé en ce que** l'élément de structure (10) comporte un logement (19a,19b,19c) pour l'un au moins des patins, comprenant des parois latérales (19a,19b) faisant saille d'un rebord (11a) pour immobiliser sensiblement le patin (30) par rapport à une direction sensiblement parallèle aux rebords (11a,11b).

4. Dispositif selon l'une des revendications précédentes, **caractérisé en ce qu'**il comporte en outre des moyens d'encliquetage latéral (23,17) de l'équipement (20) sur au moins un rebord latéral (14a,18a) que comporte l'élément de structure, adjacent aux deux rebords (11a,11b).

5. Dispositif selon la revendication 4, **caractérisé en ce que** l'équipement (20) comporte au moins un plan incliné (23) faisant saillie d'une paroi latérale externe (21), et propre à coopérer avec un logement sensiblement homologue (17) que comporte le rebord latéral (14a,18a) de l'élément de structure (10), pour former lesdits moyens d'encliquetage.

6. Dispositif selon l'une des revendications précédentes, **caractérisé en ce que** ledit équipement comporte un échangeur de chaleur (20) muni d'un faisceau de tubes réunis à chacune de leurs extrémités opposées par une plaque collectrice (22) que ferme une boîte à fluide (21) destiné à l'échange thermique.

7. Dispositif selon la revendication 6 prise en combinaison avec la revendication 5, **caractérisé en ce que** le plan incliné (23) est agencé sur une partie latérale d'au moins l'une des boîtes à fluide (21).

8. Dispositif selon l'une des revendications précédentes, **caractérisé en ce qu'**il comporte une pluralité de patins (30) en appui sur l'un et/ou l'autre des rebords internes (11a, 11b).

9. Dispositif selon la revendication 8 prise en combinaison avec l'une des revendications 6 et 7, **caractérisé en ce qu'**il comporte quatre patins (30), chacun monté à cheval sur une extrémité d'une plaque collectrice (22).

10. Dispositif selon l'une des revendications précédentes, **caractérisé en ce que** les patins (30) sont réalisés dans un matériau à grand coefficient de frottement, notamment du type comprenant un caoutchouc.

11. Dispositif selon l'une des revendications précédentes, **caractérisé en ce que** l'élément de structure comporte un module de face avant (10) comprenant un cadre ouvert (15) dans lequel est monté l'équipement (20).

## Patentansprüche

1. Vorrichtung zur Befestigung eines Ausrüstungsteils für ein Kraftfahrzeug, insbesondere eines Wärmetauschers (20), an einem Fahrzeugstrukturelement (10) mit einem offenen Teil (15) in dem das Ausrüstungsteil (20) angebracht wird, zumindest zwei Auflagen (30), die auf beiden Seiten des Ausrüstungsteils (20) angeordnet sind, während das Strukturelement zumindest zwei innere Randleisten (11a, 11b) aufweist, die im Wesentlichen parallel sind und den offenen Teil (15) begrenzen, wobei jede Auflage einerseits an einer der Randleisten (11, 11b) und andererseits an einer äußeren Scheitelfläche (24) des Ausrüstungsteils anliegt, wobei jede Auflage (30) aus einem verformbaren Material hergestellt ist, so dass das Ausrüstungsteil (20) unter Kraftwirkung zwischen den Auflagen angebracht ist, **dadurch gekennzeichnet, dass** jede Auflage im Wesentlichen eine "U"-Form aufweist, während die zwei Schenkel des "U'2" (31, 32) Kontakt mit dem Ausrüstungsteil (20) haben, um es im Wesentlichen fest in einer Ebene zu halten, die die zwei Randleisten (11, 11b) durchquert.

2. Vorrichtung nach Anspruch 1, **dadurch gekennzeichnet, dass** zumindest eine der Randleisten (11b) eine zusätzliche Anlagefläche (12b) für zumindest eine der Auflagen umfasst, die in einer zu der Oberfläche der Randleiste (11b) im Wesentlichen senkrechten Ebene vorspringt, um das Ausrüstungsteil im Wesentlichen um eine Kante (13b) schwenkbar (F) anzubringen, die von der Schnittlinie der Auflagefläche (12b) und der Randleiste (11b) gebildet wird.

3. Vorrichtung nach einem der Ansprüche 1 und 2, **dadurch gekennzeichnet, dass** das Strukturelement (10) eine Aufnahme (19a, 19b, 19c) für zumindest eine der Auflagen umfasst, die Seitenwände (19a, 19b) umfasst, die von einer Randleiste (11a) vorspringen, um die Auflagen (30) im Wesentlichen relativ zu einer Richtung zu fixieren, die parallel zu den Randleisten (11a, 11b) ist.

4. Vorrichtung nach einem der vorhergehenden Ansprüche, **dadurch gekennzeichnet, dass** sie außerdem seitliche Einrastmittel (23, 17) für das Ausrüstungsteil (20) an zumindest einer seitlichen Randleiste (14a, 18a) umfasst, die von der Struktur benachbart zu den zwei Randleisten (11a, 11b) umfasst wird.

5. Vorrichtung nach Anspruch 4, **dadurch gekennzeichnet, dass** das Ausrüstungsteil (20) zumindest eine geneigte Ebene (23) umfasst, die von einer seitlichen Außenwand (21) vorspringt und geeignet ist, mit einer im Wesentlichen dazu entsprechenden Aufnahme (17) zusammenzuwirken, die von der seitlichen Randleiste (14a, 18a) des Strukturelements (10) umfasst wird, um die Einrastmittel zu bilden.

6. Vorrichtung nach einem der vorhergehenden Ansprüche, **dadurch gekennzeichnet, dass** das Ausrüstungsteil einen Wärmetauscher (20) umfasst, der mit einem zum Wärmeaustausch bestimmten Bündel von Rohren versehen ist, die an jedem ihrer gegenüberliegenden Enden durch eine Kollektorplatte (22) vereinigt werden, die von einem Fluidkasten (21) abgeschlossen wird.

7. Vorrichtung nach Anspruch 6 in Kombination mit Anspruch 5, **dadurch gekennzeichnet, dass** die geneigte Ebene (23) an einem Seitenteil zumindest eines Fluidkastens (21) angebracht ist.

8. Vorrichtung nach einem der vorhergehenden Ansprüche, **dadurch gekennzeichnet, dass** sie mehrere Auflagen (30) umfasst, die auf der einen und/oder anderen der inneren Randleisten (11a, 11b) anliegt.

9. Vorrichtung nach Anspruch 8 in Kombination mit einem der Ansprüche 6 und 7, **dadurch gekennzeichnet, dass** sie vier Auflagen (30) umfasst, die jeweils rittlings auf einem Ende einer Kollektorplatte (22) angebracht sind.

10. Vorrichtung nach einem der vorhergehenden Ansprüche, **dadurch gekennzeichnet, dass** die Auflagen (30) aus einem Material mit einem großen Reibkoeffizienten, insbesondere einer Kautschuk umfassenden Art, hergestellt sind.

11. Vorrichtung nach einem der vorhergehenden Ansprüche, **dadurch gekennzeichnet, dass** das Strukturelement ein Vorderseitenmodul (10) umfasst, das einen offenen Rahmen (15) aufweist, in dem das Ausrüstungsteil (20) angebracht ist.

## Claims

1. Device for fixing motor vehicle equipment, particularly a heat exchanger (20), onto a structural element of the vehicle (10) comprising an open part (15) in which the equipment (20) is mounted, at least two blocks (30) arranged one on each side of the equipment (20), while the structural element comprises at least two internal rims (11a, 11b) that are roughly parallel and delimit the said open part (15), each block resting against one of the said rims (11a, 11b), on the one hand, and against an external capital surface (24) of the equipment, on the other, each block (30) being made of a deformable material so that the equipment (20) is forcibly mounted between the blocks, **characterized in that** each block has roughly the shape of a U, whereas the two legs of the U (31, 32) are in contact with the equipment (20) to keep it more or less fixed in a plane passing through the two rims (11a, 11b).

2. Device according to Claim 1, **characterized in that** at least one of the rims (11b) bears an additional bearing surface (12b) for at least one of the blocks, projecting in a plane roughly perpendicular to the surface of the rim (11b) so that the equipment can be mounted by pivoting (F) more or less about an edge (13b) formed by the intersection of the said bearing surface (12b) and the rim (11b).

3. Device according to one of Claims 1 and 2, **characterized in that** the structural element (10) has a housing (19a, 19b, 19c) for at least one of the blocks, comprising side walls (19a, 19b) projecting from a rim (11a) to more or less immobilize the block (30) relative to a direction roughly parallel to the rims (11a, 11b).

4. Device according to one of the preceding claims, **characterized in that** it further comprises means (23, 17) for laterally snap-fastening the equipment (20) on at least one lateral rim (14a, 18a) exhibited by the structural element, adjacent to the two rims (11a, 11b).

5. Device according to Claim 4, **characterized in that** the equipment (20) has at least one inclined plane (23) projecting from an external side wall (21) and able to collaborate with a more or less analogous housing (17) exhibited by the lateral rim (14a, 18a) of the structural element (10), to form the said snap-fastening means.

6. Device according to one of the preceding claims, **characterized in that** the said equipment comprises a heat exchanger (20) equipped with a bundle of tubes connected at each of their opposite ends by a manifold plate (22) closed by a fluid box (21) intended for heat exchange.

7. Device according to Claim 6 taken in combination with Claim 5, **characterized in that** the inclined plane (23) is arranged on a lateral part of at least one of the fluid boxes (21).

8. Device according to one of the preceding claims, **characterized in that** it comprises a number of blocks (30) resting against one and/or other of the internal rims (11a, 11b).

9. Device according to Claim 8 taken in combination with one of Claims 6 and 7, **characterized in that** it comprises four blocks (30) each mounted astride one end of a manifold plate (22).

10. Device according to one of the preceding claims, **characterized in that** the blocks (30) are made of a material with a high coefficient of friction, particularly of the type containing a rubber.

11. Device according to one of the preceding claims, **characterized in that** the structural element comprises a front face module (10) comprising an open frame (15) in which the equipment (20) is mounted.
